# FASCICULE DE BREVET EUROPEEN

(11) **EP 1 263 623 B1**
(45) Date de publication et mention de la délivrance du brevet: **09.01.2008**
(21) Numéro de dépôt: 01911849.6
(22) Date de dépôt: 06.03.2001
(51) Int. Cl.: B60P 1/44

(54) **HAYON ELEVATEUR ESCAMOTABLE SOUS LE PLANCHER D'UN VEHICULE OU ANALOGUE**
HEBEBÜHNE, DIE UNTER EINEM FAHRZEUGBODEN ODER DERGLEICHEM EINKLAPPBAR IST
LIFTING TAIL GATE RETRACTABLE UNDER THE FLOOR OF A MOTOR VEHICLE OR THE LIKE

(30) Priorité: 06.03.2000 FR 0002854
(43) Date de publication de la demande: 11.12.2002
(73) Titulaire: Bourgeois, Alain, Dungarvan, Co. Waterford (IE)
(72) Inventeur: Bourgeois, Alain, Dungarvan, Co. Waterford (IE)
(74) Mandataire: Honoré, Anne-Claire
(86) Numéro de dépôt international: PCT/FR2001/000647
(87) Numéro de publication internationale: WO 2001/066381

(56) Documents cités:
- EP-A- 0 629 524
- DE-C- 4 443 178
- NL-C- 1 008 208
- US-A- 2 899 089
- US-A- 4 187 766
- PATENT ABSTRACTS OF JAPAN vol. 008, no. 234 (M-334), 26 octobre 1984 (1984-10-26) & JP 59 114136 A (NIHON FURUHAAFU KK), 2 juillet 1984 (1984-07-02)

## Description

L'invention concerne un système d'escamotage sous le plancher d'un véhicule ou analogue, d'un hayon élévateur comportant une plate-forme de levage dont le déplacement vertical depuis le niveau du plancher jusqu'au sol et inversement est, obtenu par un mécanisme de levage du type à parallélogramme déformable.

On connaît depuis longtemps des hayons élévateurs, équipant notamment des véhicules automobiles et plus spécialement des véhicules destinés aux personnes handicapées. La plupart de ces hayons élévateurs sont installés dans la partie arrière du véhicule pour en faciliter l'accès aux personnes sur fauteuil roulant soit par une porte latérale, soit plus généralement par la porte arrière du véhicule.

De nombreuses solutions ont déjà été décrites pour proposer des dispositifs élévateurs conçus sur la base d'une plate-forme pouvant être déplacée depuis le plancher du véhicule jusqu'au sol et vice et versa, par le moyen de bras oscillants montés en parallélogramme déformable et actionnés par un ou plusieurs vérins hydrauliques. A cet égard, une solution particulièrement avantageuse a déjà été proposée dans le brevet européen publié sous le numéro EP-0.119.914 par le même inventeur. Ce type de hayon permettant de relever automatiquement la plate-forme du hayon est constitué par au moins un parallélogramme déformable sous l'action de moyens moteurs, le bras du parallélogramme destiné à supporter la plate-forme élévatrice se prolongeant au-delà de son point d'articulation au bras adjacent inférieur définissant ainsi un prolongement dont l'extrémité libre est articulée à ladite plate-forme élévatrice, de telle manière qu'en coopération avec une bielle fixe, cette plate-forme puisse se relever en fin de course et dégager ainsi la portière du véhicule qui peut alors être refermée.

Ce type de hayon élévateur pour véhicule, même très simplifié, est nécessairement très encombrant et occupe quoi qu'il arrive une partie non négligeable du volume intérieur du véhicule.

Pour palier cet inconvénient, il a déjà été proposé de disposer des systèmes élévateurs sous le plancher d'un véhicule, permettant une fois le système replié, de conserver le volume interne du même véhicule ; toutefois, de telles solutions sont toujours limitées à la garde au sol du véhicule à équiper, dans la mesure où les élévateurs automatiques présentaient jusqu'ici des encombrements en hauteur souvent très importants.

C'est le cas, par exemple, du brevet européen EP-0.629.524 décrivant un dispositif élévateur monté sur un véhicule pour transporter une personne à mobilité réduite. Ce dispositif élévateur comporte un chariot apte à coulisser dans une structure de support positionnée sous le plancher d'un véhicule et une plate-forme de levage articulée au chariot par un parallélogramme déformable comprenant des bras latéraux inférieurs et des bras latéraux supérieurs solidaires du chariot par des liaisons à pivot de manière à fonctionner entre une position élevée et une position abaissée. La plate-forme externe de levage est amenée depuis sa position abaissée jusqu'à sa position élevée ou inversement grâce à un vérin dont l'extrémité du piston est montée en pivot sur une traverse reliant les bras latéraux supérieurs de la plate-forme de levage et dont le cylindre est monté en pivot sur une traverse reliant les barres latérales du chariot. Ainsi, lorsque le vérin est actionné, ce dernier pivote autour de ses pivots respectifs afin d'amener la plate-forme extrême de levage depuis sa position élevée jusqu'à sa position abaissée ou inversement.

Ce type de hayon élévateur pour véhicule nécessite un vérin de forte puissance nécessairement encombrant, le pivotement dudit vérin autour de ses pivots respectifs ayant pour conséquence d'accroître encore l'encombrement en hauteur du chariot, ce qui limite la garde au sol du véhicule à équiper.

La présente invention a pour objet principal de proposer un système d'escamotage sous le plancher d'un véhicule et notamment d'un véhicule destiné aux personnes handicapées, d'un hayon élévateur de très faible encombrement lorsqu'il est en position de repos escamoté sous le plancher. A cet effet et selon l'invention, il est prévu d'utiliser un hayon élévateur du même type que celui décrit dans le brevet européen déjà cité qui est particulièrement économique en ce qu'il comporte une plate-forme dont le déplacement vertical depuis le niveau du sol jusqu'au plancher est obtenu par un mécanisme de levage comprenant au moins deux bras oscillants en parallèle autour de pivots fixes suivant un parallélogramme déformable dont l'un des bras, dit bras moteur, est entraîné à rotation autour de son pivot fixe par un vérin, lui-même alimenté par un fluide sous pression provenant d'une centrale autonome, les pivots fixes desdits bras oscillants, le ou les vérins d'entraînement ainsi que les organes de commande et de sécurité de l'ensemble étant montés sur un chariot capable de se déplacer sous le plancher, parallèlement à celui-ci, grâce à des éléments de guidage et d'entraînement manuels ou automatiques connus en soi (rail de guidage et entraînement par pignon et chaîne sans fin par exemple), depuis une position intérieure, dite de repos, où le hayon élévateur est escamoté jusqu'à une position, dite de travail, où il peut se déployer verticalement ; le système d'escamotage conforme à l'invention est remarquable en ce que le où les vérins sont rigidement solidarisés audit chariot; de telle manière que sa tige puisse se déplacer parallèlement au plancher et suivant la direction du déplacement du même chariot.

Il est ainsi facile de comprendre que pour occuper un volume minimal sous le plancher, il est nécessaire de mettre le mécanisme de relevage de la plate-forme de telle manière que les bras oscillants soient en position horizontale parallèle au plancher du véhicule, c'est-à-dire parallèles à la direction d'avancement dudit chariot. En général, ces hayons élévateurs sous plancher sont disposés dans des coffres fermés en vue de leur protection notamment lors de la circulation des véhicules. Or, pour un bon fonctionnement du chariot permettant de sortir ou d'escamoter le hayon élévateur, il est essentiel que la plate-forme notamment, ne vienne pas frotter avec la partie inférieure du coffret de protection; ce serait par exemple le cas lorsque le vérin de commande présente une légère fuite, par exemple après un temps prolongé de stockage à l'arrêt, ce qui aurait pour effet de faire basculer vers le bas le mécanisme de relevage et d'entraîner un frottement de la plate-forme sur le bas du coffret qui pourrait définitivement bloquer le système de sortie du chariot.

Un autre objet de l'invention consiste donc à proposer une solution de verrouillage automatique et indépendant de l'alimentation du vérin de manière à éviter de tels frottements de la plate-forme en cas de fuite du vérin. A cet égard, le système d'escamotage du hayon élévateur selon l'invention est remarquable en ce qu'il comprend des moyens de verrouillage consistant en un loquet articulé sur le chariot contre lequel vient en butée la tige du vérin lorsqu'elle est en position où les bras sont horizontaux, pendant le déplacement du chariot et lorsque celui-ci est en position escamotée de repos ; des moyens de relâchement du loquet sont automatiquement mis en oeuvre lorsque le hayon élévateur arrive en position sortie de travail.

D'autres caractéristiques et avantages ressortiront mieux de la description qui va être donnée ci-après de plusieurs variantes d'exécution de systèmes d'escamotage de hayons élévateurs conformes à l'invention et donnés ci-après à titre d'exemples non limitatifs en référence aux dessins annexés sur lesquels :
- la figure 1 est une représentation en élévation d'une coupe longitudinale dans le plan vertical du hayon élévateur conforme à l'invention en position de repos, escamoté sous le plancher,
- la figure 2 est une représentation en coupe partielle du dispositif représenté en figure 1, lorsqu'il est en position de travail c'est-à-dire élévateur sorti mais en position mécaniquement verrouillé,
- la figure 3 est une représentation identique à la figure 2 en position intermédiaire de fonctionnement permettant de libérer le dispositif automatique de verrouillage,
- la figure 4 est une représentation en coupe longitudinale suivant le plan de symétrie verticale du vérin équipant le dispositif représenté aux figures précédentes,
- les figures 5 à 7 sont une représentation schématique d'une première variante d'entraînement d'un bras oscillant moteur grâce à une biellette intermédiaire de poussée reliant la tige du vérin à la manivelle d'entraînement, dans trois positions de la plate-forme, à l'horizontale (figure 5), au sol (figure 6), au raz du plancher (figure 7),
- les figures 8 à 9 sont des représentations schématiques d'une deuxième variante de l'invention montrant le couplage entre la tige du vérin monté inversé et la tête de manivelle d'entraînement d'un bras oscillant dans trois positions de la plate-forme, au sol (figure 8), au raz du plancher (figure 9) et à l'horizontale (figure 10).

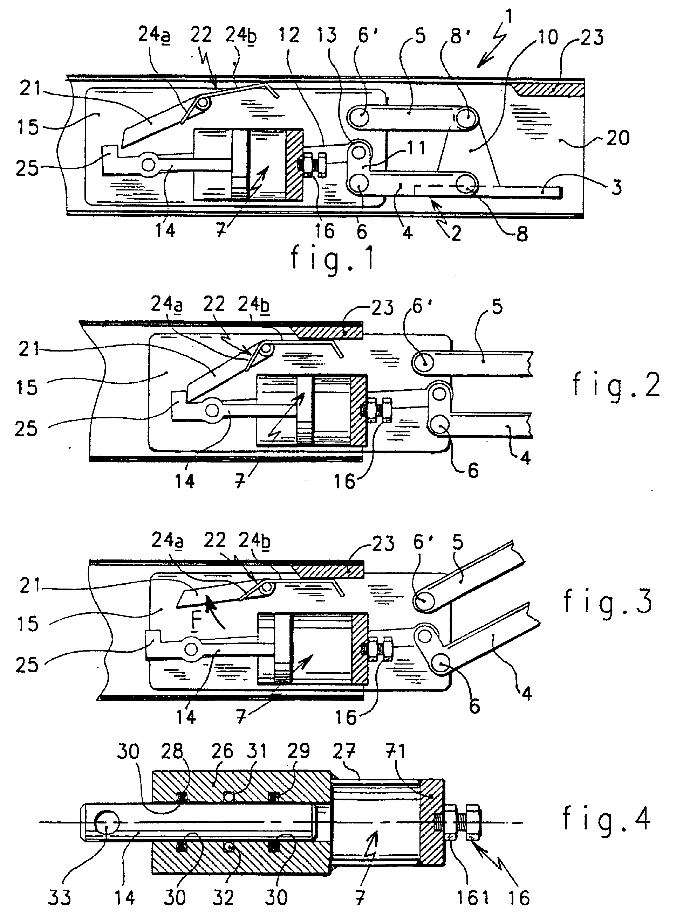

En référence aux figures 1, 2 et 3, le système d'escamotage sous le plancher 1 d'un véhicule (non représenté sur les figures) d'un hayon élévateur 2, monté sous une forme schématique sur la figure 1, comporte pour l'essentiel une plate-forme 3 dont le déplacement vertical depuis le niveau du plancher 1 jusqu'au sol est obtenu par un mécanisme de levage comprenant au moins deux bras 4,5 oscillant en parallèle autour de pivots fixes 6,6' suivant un parallélogramme déformable dont l'un des bras, dit bras moteur 4, est entraîné à rotation autour de son pivot fixe 6 par un vérin 7. A l'autre extrémité des bras 4,5, c'est-à-dire à l'opposé de leurs articulations par les pivots fixes 6,6', des pivots mobiles 8,8' viennent se fixer sur une chape 10 supportant en partie inférieure et vers l'avant par rapport aux bras oscillant 4,5, la plate-forme 3 permettant, par déformation du parallélogramme formé par les deux bras oscillant 4,5, la chape 10 et les articulations formées par les pivots 8,8', de relever ou d'abaisser la plate-forme 3 dans un plan vertical, tout en conservant une position horizontale, ce qui permet en définitive de déplacer un objet ou une personne sur la plate-forme 3 entre deux niveaux, par exemple entre le sol et le plancher d'un véhicule pour y entrer ou inversement. Le mécanisme d'entraînement en rotation du bras moteur 4 autour de son pivot 6 est obtenu au moyen d'une manivelle 11 avantageusement perpendiculaire au bras moteur 4 procurant le couple d'entraînement nécessaire au relevage de la plate-forme 3, grâce à une bielle 12 articulée entre la tête 13 de la manivelle 11 et l'extrémité de la tige 14 du vérin 7.

Conformément à la caractéristique principale de l'invention, les pivots fixes 6,6' des bras oscillant 4,5, le vérin d'entraînement 7 et les organes de commande et de sécurité (non représentés sur les figures) sont montés sur un chariot 15 capable de se déplacer sous le plancher 1, parallèlement à celui-ci, grâce à des éléments de guidage et d'entraînement tout à fait classiques (non représentés sur les dessins), qui naturellement pourront être manuels ou automatiques comme par exemple des roulettes guidées par des rails et une chaîne sans fin pour entraîner d'arrière en avant le chariot 15 le long du plancher 1 en vue de passer le système d'escamotage de l'invention depuis sa position de repos jusqu'à sa position de travail et inversement ; on notera que sur les figures, seul le panneau latéral du chariot 15 a été représenté pour donner une meilleure lisibilité du dispositif. Dans la mesure où selon l'invention, il est recherché un encombrement vertical minimal pour le dispositif dans son ensemble, on comprend bien la nécessité d'optimiser l'encombrement de chaque pièce formant ce mécanisme. Dans ce sens et selon la caractéristique principale de l'invention, le vérin 7 et les éléments mobiles qu'il entraîne, doivent autant que possible, dans tous leurs mouvements, rester dans un encombrement minimum. Pour se faire, il a été prévu de solidariser le vérin 7 directement sur la ou les faces latérales du chariot 15 et ce, de telle manière que sa tige 14 se déplace parallèlement au plancher 1 et suivant la direction du déplacement du chariot 15.

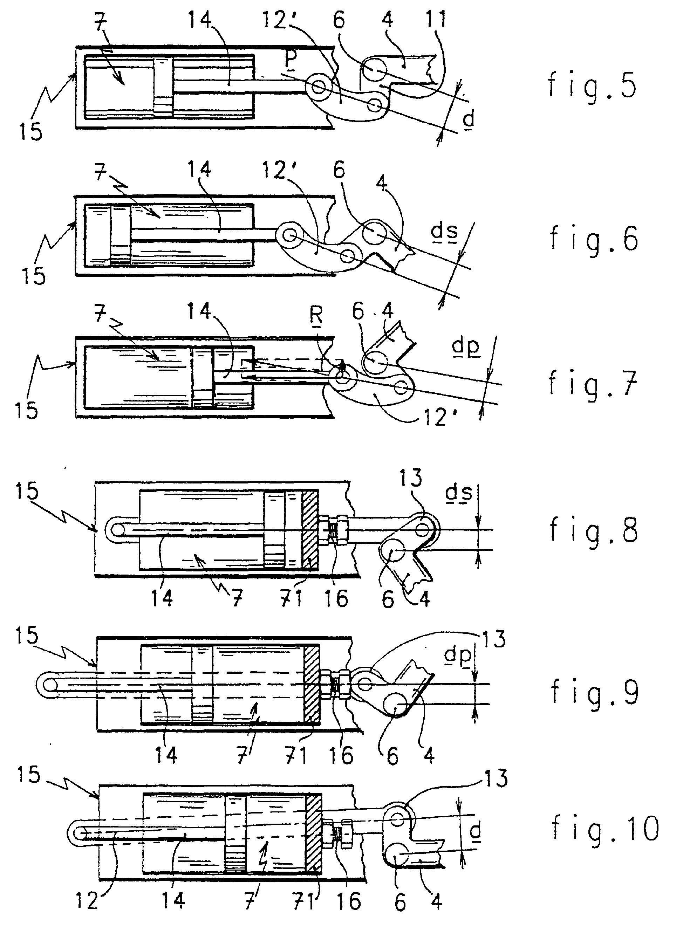

En référence plus particulièrement aux figures 5, 6 et 7, il sera maintenant décrit une première variante d'un couplage entre le vérin 7 et le mécanisme de relevage du hayon élévateur 2 conforme à l'invention telle que décrite au-dessus.

Selon cette exécution, la tige 14 du vérin 7 est située du même côté que le mécanisme de relevage de la plate-forme 3 ; selon cette construction, le bras moteur 4, articulé autour de son pivot 6 fixé au chariot 15 est entraîné par la manivelle 11 comme il a été dit, elle-même articulée à la tige 14 par une biellette de poussée 12' de dimension et de forme telle qu'elle puisse transmettre le couple nécessaire au bras moteur 4 ; sur les figures 6 et 7 notamment, représentant respectivement la position du mécanisme lorsque la plate-forme est au sol (figure 6), et lorsque la plate-forme est au niveau du plancher (figure 7) on voit bien la variation de la distance d entre l'axe d'articulation du bras moteur 4 et la ligne de poussée p transmise par la bielle 12'. Ainsi, il ressort bien que la poussée nécessaire pour le vérin 7 est beaucoup plus importante lorsque la plate-forme est en position de travail haute, c'est-à-dire au niveau du plancher. En effet, à cet instant le vérin est en poussée maximale puisque la distance dp est minimale et par conséquent la poussée de la tige 14 doit être maximale pour obtenir le même couple de relevage.

Cette première solution est donc particulièrement peu avantageuse dans la mesure où, mécaniquement, la poussée maximale a lieu lorsque la tige 14 est dans sa position d'extension maximale (fig. 7) ; dans cette position, le couple résultant de la charge sur la plate-forme 3 créé une force de réaction dont la composante verticale R appliquée sur la tige 14 complètement en extension (fig. 7), crée un couple de basculement sur le piston du vérin 7 qui peut engendrer à terme une usure prématurée et des risques de fuites importantes.

En raison de cet inconvénient et selon une autre caractéristique fondamentale de l'invention, il est proposé une variante du couplage entre la tige 14 du vérin 7 et la manivelle 11 du bras moteur 4, représentée schématiquement sur les figures 8 à 10.

Dans cette variante, la tige du vérin agit en tirant sur la manivelle 11 pour procurer le relevage de la plate-forme 3. Dans cette exécution, la position du vérin se retrouve à 180° par rapport à la variante précédente et la tige 14 est reliée à la manivelle 11 suivant une biellette tirante 12 représentée également sur les figures 1, 2 et 3.

Comme on peut le voir facilement sur les figures 8 à 10, l'effort produit par la tige 14 du vérin 7 reste dans tous les cas, dans une direction assez sensiblement proche de l'axe de la tige 14, ce qui limite le couple de basculement représenté en figure 7 dans la variante précédente. D'un autre côté, et comme représenté aux figures 8 et 9, la distance d de la ligne de poussée au centre d'articulation est relativement constante, donnant ainsi des mouvements plus réguliers de monte et baisse du hayon élévateur.

Selon une autre caractéristique de l'invention que procure cette deuxième variante de l'invention, on peut monter sur le culot 71 du vérin 7 une butée 16 réglable en longueur, c'est-à-dire colinéaire à l'axe du déplacement de la tige 14 du vérin 7. Cette butée 16 est particulièrement avantageuse en ce qu'elle permet de limiter la rotation dans le plan vertical et vers le haut du bras moteur 4, lorsque la tête 13 de la manivelle 11 vient en appui sur la butée 16, comme schématiquement représenté sur la figure 9 ; selon cette exécution, il suffit de régler la butée 16 pour faire coïncider la plate-forme 3 avec le niveau du plancher 1.

Comme il a déjà été dit en préambule, ces hayons élévateurs 2 escamotables sous le plancher 1 d'un véhicule par exemple pour personnes handicapées, sont souvent protégés dans des enceintes 20 fermées. Dans ces conditions, on comprend d'autant plus la nécessité de manoeuvrer le mécanisme de relevage du hayon élévateur 2 en position horizontale, c'est-à-dire bras oscillant 4 et 5 sensiblement parallèles au plancher 1. Il suffit pour cela, avant de pousser le chariot 15 à l'intérieur de l'enceinte 20, de mettre le vérin 7 dans les positions représentées aux figures 5 et 10, correspondant respectivement à la première et à la deuxième variante décrite ci-avant.

Dès lors, on voit bien que les mouvements du chariot 15 sous le plancher 1 ne doivent pas être entravés par le contact intempestif d'une quelconque pièce du mécanisme ; ce serait notamment le cas de la plate-forme 3 qui pourrait reposer sur le fond de l'enceinte 20 si, par exemple pendant une période de stockage, le maintien en position horizontale par le vérin 7 s'avérait défectueux, soit en raison d'une fuite ou d'une fausse manoeuvre par exemple. On comprend alors que la plate-forme 3 empêcherait complètement tout mouvement longitudinal du chariot 15. Pour palier cet inconvénient et en référence aux figures 2 et 3, il est prévu de compléter le système d'escamotage du hayon élévateur 2 par des moyens de verrouillage consistant selon une exécution préférée de l'invention et représentée sur les figures 1, 2 et 3, en un loquet 21 articulé sur le chariot 15 contre lequel la tige 14 du vérin 7 peut venir en butée dès lors que les bras oscillant 4,5 sont en position horizontale et que le chariot 15 se déplace, ou bien lorsqu'il est en position sortie de travail (figures 2 et 3). Selon une exécution particulière, les moyens de relâchement du loquet 21 consistent en une pièce 22 articulée sur le chariot et couplée au loquet 21 de telle sorte qu'en coopérant avec une came 23 fixée sous le plancher 1, dès que le hayon 2 est en position sortie de travail, c'est-à-dire hors de l'enceinte 20, le loquet 21 se trouve dégagé de la tige 14 du vérin 7 qui est alors libre de se mouvoir pour actionner le mécanisme élévateur.

Selon une exécution préférée, la pièce articulée 22 est un ressort de torsion à deux branches, s'étendant de part et d'autre d'une spire centrale montée coaxialement sur l'axe d'articulation du loquet 21 dont une branche 24a est solidaire et prend appui sous ledit loquet 21 et l'autre branche 24b est conformée pour prendre appui sur la came 23 au moment précis où le chariot 15 atteint l'extrémité de l'enceinte 20, c'est-à-dire au moment où le mécanisme de relevage de la plate-forme 3 se trouve entièrement à l'extérieur de ladite enceinte, en position de relever la plate-forme 3 jusqu'au niveau du plancher ou l'abaisser jusqu'au sol.

On expliquera maintenant le fonctionnement du verrouillage automatique du mécanisme à l'intérieur de l'enceinte 20 :

Lorsque le chariot 15 est repoussé à l'intérieur de l'enceinte 20 comme représenté sur la figure 1, le ressort 22 ne subit aucune contrainte et permet donc au loquet 21 de retomber par gravité, de telle manière qu'il puisse venir derrière un ergot 25, prévu par exemple en bout de la tige 14 du vérin 7 ; il va de soi que la forme et la longueur du loquet 21 sont ajustées pour venir en butée sur l'ergot 25 lorsque la tige 14 du vérin 7 est dans la position intermédiaire où les bras oscillant 4 et 5 sont horizontaux. Ainsi, lorsque volontairement ou par accident, le vérin 7 n'est plus alimenté ou présente une fuite, la tige 14 est sollicitée par la manivelle 11 du bras 4 en raison du porte-à-faux du hayon élévateur 2 ce qui entraîne un recul de la tige et une mise en contact du loquet 21 sur la butée 25 de la tige 14 évitant la chute du mécanisme de relevage et de la plate-forme 3 contre le fond de l'enceinte 20. Lorsque le chariot est sorti de l'enceinte 20 en vue d'utiliser le hayon 2, la branche libre 24b du ressort 22 arrive au contact de la came 23 comme représenté sur la figure 2 ; à cet instant, la branche 24b comprimée sous la came 23, crée un couple de rappel de bas en haut sur le loquet 21 qui reste néanmoins bloqué contre la butée 25 jusqu'à ce que le vérin 7 soit mis sous pression au moins un court instant, afin de débloquer le loquet 21 qui peut alors remonter comme indiqué sur la flèche F de la figure 3 sous la pression du ressort tendu 22 et libérer ainsi tous mouvements horizontaux de la tige 14 et donc tous mouvements du parallélogramme déformable du hayon élévateur 2.

Il est bien évident que le mécanisme qui vient d'être décrit en détail dans l'exécution préférée du système d'escamotage à vérin inversé serait exactement identique pour un système à vérin poussant, tel que décrit en première variante au-dessus. Naturellement, la came 23 ne serait plus disposée au même endroit mais de l'autre côté du vérin et le loquet 21 serait alors lui-même inversé par rapport à son articulation de manière à venir en contact sur la butée d'extrémité 25 de la tige 14 fonctionnant à l'inverse.

Selon une autre caractéristique importante de l'invention et quelles que soient ses variantes d'exécution, le corps du vérin 7 est solidarisé à la paroi métallique verticale du chariot 15 par soudage. En effet, ce mode de solidarisation sera préféré à un système de fixation par vis et boulon plus classique mais qui nécessiterait un surdimensionnement coûteux compte tenu de la faible épaisseur de la paroi du chariot, en raison du faible encombrement de l'ensemble caractérisant le système de l'invention. Ainsi et en référence à la figure 4, est-t-il prévu d'utiliser sans que ce soit obligatoire, des vérins particulièrement avantageux pour le fonctionnement du système d'escamotage conforme à l'invention, constitués pour former le corps de deux cylindres concentriques 26 et 27 dont l'un 26 a une épaisseur suffisante pour permettre le soudage à la paroi latérale du chariot 15 et comprend intérieurement au moins deux gorges circulaires 28,29 qui sont en principe identiques et permettent de recevoir des bagues 30 en un matériau à faible coefficient de frottement, tel que du "nylon" par exemple, suffisamment espacées pour assurer le guidage de la tige 14 et au moins une troisième gorge 31 permettant de disposer un segment d'étanchéité 32 ; l'autre cylindre 27, de même diamètre interne que le premier cylindre, est soudé à celui-ci dans son prolongement ; ce cylindre 27 a une épaisseur moindre que le premier permettant une économie de matière, épaisseur toutefois suffisante pour former la chambre du vérin 7 qui est fermée à son extrémité par un culot métallique 71 rapporté soudé, d'épaisseur convenable pour recevoir comme on l'a déjà dit, la butée 16 permettant de limiter le déplacement de la plate-forme 3 au-delà du plancher 1. Il est à noter que la butée 16 peut être réalisée de toutes manières et en particulier, il peut s'agir d'un simple boulon venant se visser à l'intérieur du culot 71, un contre écrou 161 venant contreserrer la butée 16 sur le culot 71 lorsqu'elle est correctement réglée. Enfin, la tige 14 coopérant avec le corps de vérin qui vient d'être décrit est constituée d'une simple barre métallique cylindrique, comme représentée sur la figure 4, susceptible de coulisser librement à l'intérieur des bagues "nylon" 30 sous la poussée d'un fluide sous pression accédant à l'intérieur de la chambre constituée de la partie intérieure du cylindre 27 ; à l'extrémité libre de cette barre, il est soudé une articulation 33 destinée à recevoir les bielles 12,12' d'entraînement du bras moteur 4.

## Revendications

1. - Système d'escamotage sous le plancher (1) d'un véhicule ou analogue, d'un hayon élévateur (2) comportant une plate-forme (3) dont le déplacement vertical depuis le niveau du plancher (1) jusqu'au sol est obtenu par un mécanisme de levage comprenant au moins deux bras (4,5) oscillants en parallèle autour de pivots fixes (6,7) suivant un parallélogramme déformable dont l'un des bras (4), dit bras moteur, est entraîné à rotation autour de son pivot fixe (6) par un vérin (7), les pivots fixes (6,6') des bras oscillant (4,5), le vérin d'entraînement (7) et les organes de commande et de sécurité étant montés sur un chariot (15) capable de se déplacer sous le plancher (1), parallèlement à celui-ci, grâce à des éléments de guidage et d'entraînement manuels ou automatiques connus en soi depuis une position intérieure où le hayon élévateur (2) est escamoté jusqu'à une position où il peut se mouvoir verticalement, **caractérisé en ce que** le vérin (7) est solidarisé de façon rigide au chariot (15) de telle sorte que sa tige (14) se déplace parallèlement au plancher (1) et suivant la direction du déplacement du chariot (15).

2. - Système d'escamotage d'un hayon élévateur (2) selon la revendication 1 **caractérisé en ce que** la tige (14) du vérin (7) sort du même côté que les bras (4,5) de levage de la plate-forme (3), suivant un axe verticalement décalé du pivot d'articulation (6) du bras moteur (4) couplé à une manivelle d'entraînement (11) qui est reliée à l'extrémité de la tige (14) du vérin (7) par une biellette intermédiaire de poussée (12') assurant la transformation du mouvement linéaire de la tige (14) en un mouvement oscillatoire des bras (4,5) autour de leurs pivots (6,6').

3. - Système d'escamotage d'un hayon élévateur (2) selon la revendication 1 **caractérisé en ce que** la tige (14) du vérin (7) sort à l'opposé des bras (4,5) de levage de la plate-forme (3) suivant un axe verticalement décalé du pivot d'articulation (6) du bras moteur (4) couplé à une manivelle d'entraînement (11) qui est reliée à l'extrémité de la tige (14) par une bielle intermédiaire de tirage (12) transformant le mouvement de la tige (14) en mouvement oscillant des bras (4,5) autour de leurs pivots (6,6').

4. - Système d'escamotage d'un hayon élévateur (2) selon l'une quelconque des revendications précédentes **caractérisé en ce que** des moyens de verrouillage autonomes sont associés au mécanisme de relevage pour que les bras oscillants (4,5) restent obligatoirement en position horizontale, c'est-à-dire en position d'encombrement vertical minimal, pendant les déplacements internes du chariot (15) et lorsque le hayon élévateur (2) est en position de repos escamoté.

5. - Système d'escamotage d'un hayon élévateur (2) selon la revendication 4 **caractérisé en ce que** les moyens de verrouillage consistent en un loquet (21) articulé sur le chariot (15) contre lequel vient en butée (25) la tige (14) du vérin (7) en position où les bras (4,5) sont horizontaux, pendant le déplacement du chariot (15) et lorsqu'il est en position escamotée de repos, et des moyens de relâchement du loquet (21) intervenant automatiquement lorsque le hayon élévateur (2) est en position sortie de travail.

6. - Système d'escamotage d'un hayon élévateur (2) selon la revendication 5 **caractérisé en ce que** les moyens de relâchement du loquet (21) consistent en une pièce (22) articulée sur le chariot et couplée au loquet (21) de telle sorte qu'en coopérant avec une came (23) fixée sous le plancher (1) dès que le hayon élévateur (2) est en position de travail, c'est-à-dire hors du plancher (1), le loquet (21) soit dégagé de la tige (14) du vérin (7) qui est alors libre de se mouvoir pour actionner l'élévateur.

7. - Système d'escamotage d'un hayon élévateur (2) selon la revendication 6 **caractérisé en ce que** la pièce articulée (22) est un ressort de torsion à deux branches (24) s'étendant de part et d'autre d'une spire centrale monté sur l'axe d'articulation du loquet (21), dont une branche (24a) est solidaire et prend appui sous ledit loquet (21) et l'autre branche (24b) est conformée pour prendre appui sur la came (23).

8. - Système d'escamotage d'un hayon élévateur (2) selon l'une quelconque des revendications 3 à 7 **caractérisé en ce qu'**une butée réglable (16) est montée sur le culot (71) du vérin (7) pour limiter dans le mouvement de montée de la plate-forme (3) la course de la manivelle (11) dont la tête (13) vient au contact de ladite butée (16) qui est pré-réglée pour que la plate-forme (3) ne dépasse pas le plancher (1).

9. - Système d'escamotage d'un hayon élévateur (2) selon l'une quelconque des revendications précédentes **caractérisé en ce que** le corps du vérin (7) est solidarisé à la paroi métallique verticale du chariot (15) par soudage.

10. - Système d'escamotage d'un hayon élévateur (2) selon l'une quelconque des revendications précédentes **caractérisé en ce que** le ou les vérins (7) est(sont) constitué(s) d'une part pour le corps, de deux cylindres concentriques (26,27) dont l'un (26) a une épaisseur permettant le soudage et comprenant intérieurement au moins deux gorges circulaires (28,29) et identiques pour recevoir des bagues (30) en matériau à faible coefficient de frottement, suffisamment espacées pour assurer le guidage de la tige (14) et au moins une troisième gorge (31) pour recevoir un segment d'étanchéité (32), et l'autre cylindre (27), de même diamètre interne et soudé au premier (26) dans son prolongement, a une épaisseur moindre mais suffisante pour former la chambre du vérin (7) qui est fermée à son extrémité par un culot métallique (71) rapporté soudé et apte à recevoir la butée (16) qui vient se visser dans son épaisseur et d'autre part pour la tige (14), d'un simple barreau de métal venant coulisser juste dans lesdites bagues (30) et muni à son extrémité externe d'un organe de liaison (33) et de coopération éventuelle avec le loquet (21).

## Claims

1. System for retracting under the floor (1) of a motor vehicle or the like, of a lifting tailgate (2) comprising a platform (3) which is displaced vertically from the floor (1) to the ground obtained by a raising mechanism including at least two arms (4,5) oscillating about fixed pivots (6,7) in a deformable parallelogram whereof one of the arms (4), called a power arm, is driven in rotation about its fixed pivot (6) by an actuator (7). The invention is **characterised in that** the fixed pivots (6,6') of the oscillating arms (4, 5), the driving actuator (7) and the control and safety members are mounted on a carriage (15) capable of moving beneath the floor (1), parallel thereto, thanks to manual or automatic guiding and driving elements known per se from a position wherein the tailgate (2) is retracted to a position wherein it can move vertically, **characterised in that** the actuator (7) is secured to the carriage (15) so that its rod (14) moves parallel to the floor (1) and along a direction displacing the carriage (15).

2. System for retracting a lifting tailgate (2) according to claim 1 **characterised in that** the rod (14) of the actuator (7) projects from the same side as the raising arms (4, 5) of the platform (3), along a vertically-shifted axis of the joint pivot (6) of the power arm (4) coupled to a driving crank (11) which is connected to the end of the rod (14) of the actuator (7) by an intermediary thrust link (12') providing the transformation of the linear movement of rod (14) into an oscillating movement of the arms (4,5) around their pivots (6,6').

3. System for retracting a lifting tailgate (2) according to claim 1 **characterised in that** the rod (14) of the actuator (7) projects from the opposite side of the raising arms (4,5) of the platform (3) along a vertically-shifted axis of the joint pivot (6) of the power arm (4) coupled to a driving crank (11) which is connected to the end of the rod (14) by an intermediary drawing bar (12) transforming the movement of the rod (14) into an oscillating movement of the arms (4, 5) around their pivots (6, 6').

4. System for retracting a lifting tailgate (2) as according to any of the preceding claims **characterised in that** autonomous means of locking are associated to the raising mechanism so that the oscillating arms (4,5) remain obligatorily in a horizontal position, i.e. in a position of minimal vertical space, during the internal movements of carriage (15) and when the lifting tailgate (2) is in retracted at rest position.

5. System for retracting a lifting tailgate (2) according to claim 4 **characterised in that** the means of locking consist of a catch (21) articulated around the carriage (15) against which strikes (25) rod (14) of actuator (7) in a position where arms (4,5) are horizontal, during the displacement of the carriage (15) and when it is in retracted at rest position, and means of releasing catch (21) intervening automatically when the lifting tailgate (2) is in withdrawn working position.

6. System for retracting a lifting tailgate (2) according to claim 5 **characterised in that** means of releasing catch (21) consist in an articulated part (22) on the carriage and coupled to catch (21) in such a way that in cooperating with a cam (23) fixed under the floor (1) as soon as the lifting tailgate (2) is in working position, i.e. out of the floor (1), the catch (21) is clear from the rod (14) of the actuator (7) which is then free to move in order to actuate the lift assembly.

7. System for retracting a lifting tailgate (2) according to claim 6 **characterised in that** articulated part (22) is a two-branch torsion spring (24) extending on either side of a central coil mounted on the articulation axis of catch (21), of which one branch (24a) is secured and takes support under said catch (21) and the other branch (24b) is shaped to take support on the cam (23).

8. System for retracting a lifting tailgate (2) as according to any of claims 3 to 7 **characterised in that** an adjustable stop (16) is mounted on the base (71) of the actuator (7) in order to limit in the movement of the rising of platform (3) the travel of the crank (11) of which the head (13) comes into contact of said stop (16) which is preset so that the platform (3) does not go beyond the floor (1).

9. System for retracting a lifting tailgate (2) as according to any of the preceding claims **characterised in that** the body of actuator (7) is secured to the vertical metal wall of carriage (15) via welding.

10. System for retracting a lifting tailgate (2) as according to any of the preceding claims **characterised in that** the actuator(s) (7) is(are) comprised on the one hand for the body, of two concentric cylinders (26,27) of which one (26) has a thickness allowing for the welding and comprising interiorly at least two peripheral and identical grooves (28, 29) in order to receive rings (30) made of a material of low friction coefficient, sufficiently spaced in order to provide guiding for the rod (14) and at least one third groove (31) in order to receive a tight segment (32), and the other cylinder (27), of same internal diameter and welded to the first (26) in its extension, has a lesser thickness but sufficient to form the chamber of the actuator (7) which is closed at its end by an inserted welded metal base (71) and used to receive the stop (16) which is threaded in its thickness and on the other hand for rod (14), of a simple bar of metal coming to slide exactly in said rings (30) and provided with on its external end of a link member (33) and with a possible cooperation with catch (21).

## Patentansprüche

1. Einziehsystem unter dem Boden (1) eines Fahrzeugs oder Ähnlichem, einer Ladebordwand (2), die eine Plattform (3) umfasst, deren vertikale Bewegung ausgehend vom Niveau des Fahrzeugbodens (1) bis zum Fahrbahnniveau durch einen Hebemechanismus erwirkt wird, der zumindest zwei Arme (4, 5) umfasst, die parallel um festsitzende Drehpunkte (6, 7) gemäß einem verformbaren Parallelogramm schwenken, wovon einer der Arme (4), der so genannte Antriebsarm, durch einen Zylinder (7) um seinen festsitzenden Drehpunkt (6) in Rotation versetzt wird, wobei die festsitzenden Drehpunkte (6, 6') der Schwenkarme (4, 5), der Antriebszylinder (7) und die Steuer- und Sicherheitsorgane auf einem Schlitten (15) befestigt sind, der in der Lage ist, sich mithilfe von an sich bekannten, automatischen oder manuellen Führungs- und Antriebselementen unter dem Boden (1) parallel zu diesem ausgehend von einer Innenposition, in der die Ladebordwand (2) eingezogen ist, in eine Position zu verschieben, in der sie sich vertikal bewegen kann, **dadurch gekennzeichnet, dass** der Zylinder (7) mit dem Schlitten (15) starr verbunden ist, so dass sich seine Stange (14) parallel zum Boden (1) und gemäß der Verschiebungsrichtung des Schlittens (15) bewegt.

2. Einziehsystem einer Ladebordwand (2) nach Anspruch 1, **dadurch gekennzeichnet, dass** die Stange (14) des Zylinders (7) auf der gleichen Seite wie die Hebearme (4, 5) der Plattform (3) ausfährt, und zwar gemäß einer vertikal versetzten Achse des Gelenkdrehpunktes (6) des Antriebsarmes (4), der an eine Schleppkurbel (11) gekoppelt ist, die über eine Zwischenschubstange (12'), welche die Umwandlung der linearen Bewegung der Stange (14) in eine oszillierende Bewegung der Arme (4, 5) um ihre Drehpunkte (6, 6') sicherstellt, mit dem Ende der Stange (14) des Zylinders (7) verbunden ist.

3. Einziehsystem einer Ladebordwand (2) nach Anspruch 1, **dadurch gekennzeichnet, dass** die Stange (14) des Zylinders (7) auf der gegenüberliegenden Seite der Hebearme (4, 5) der Plattform (3) ausfährt, und zwar gemäß einer vertikal versetzten Achse des Gelenkdrehpunktes (6) des Antriebsarmes (4), der an eine Schleppkurbel (11) gekoppelt ist, die über eine Zwischenzugstange (12), welche die Bewegung der Stange (14) in eine oszillierende Bewegung der Arme (4, 5) um ihre Drehpunkte (6, 6') umwandelt, mit dem Ende der Stange (14) verbunden ist.

4. Einziehsystem einer Ladebordwand (2) nach einem der vorhergehenden Ansprüche, **dadurch gekennzeichnet, dass** autonome verriegelungsmittel mit dem Hebemechanismus verbunden sind, damit die oszillierenden Arme (4, 5) obligatorisch in horizontaler Position verbleiben, das heißt in einer Position mit minimalem vertikalen Platzbedarf, während der Innenbewegungen des Schlittens (15) und wenn sich die Ladebordwand (2) in eingezogener Ruheposition befindet.

5. Einziehsystem einer Ladebordwand (2) nach Anspruch 4, **dadurch gekennzeichnet, dass** die Verriegelungsmittel aus einem Fallriegel (21), der auf dem Schlitten (15) gelenkig gelagert ist und gegen welchen die Stange (14) des Zylinders (7) in einer Position anschlägt (25), in der die Arme (4, 5) horizontal sind, während der Bewegung des Schlittens (15) und wenn er sich in eingezogener Ruheposition befindet, und aus Mittel zur Lockerung des Fallriegels (21) bestehen, die automatisch wirksam werden, wenn sich die Ladebordwand (2) in ausgefahrener Arbeitsposition befindet.

6. Einziehsystem einer Ladebordwand (2) nach Anspruch 5, **dadurch gekennzeichnet, dass** die Mittel zur Lockerung des Fallriegels (21) aus einem Teil (22) bestehen, das auf dem Schlitten gelenkig gelagert und mit dem Fallriegel (21) so gekoppelt ist, dass, sobald sich die Ladebordwand (2) in Arbeitsposition befindet, das heißt außerhalb des Bodens (1), durch Zusammenwirken mit einem Nocken (23), der unter dem Boden (1) befestigt ist, der Fallriegel (21) von der Stange (14) des Zylinders (7) gelöst wird, der sich nun frei bewegen kann, um die Bordwand zu betätigen.

7. Einziehsystem einer Ladebordwand (2) nach Anspruch 6, **dadurch gekennzeichnet, dass** das gelenkig gelagerte Teil (22) eine Torsionsfeder mit zwei Schenkeln (24) ist, die sich auf beiden Seiten einer zentralen Windung erstrecken, die auf der Gelenkachse des Fallriegels befestigt ist, wovon ein Schenkel (24a) mit dem besagten Fallriegel (21) verbunden ist und sich gegen diesen stützt, und der andere Schenkel (24b) so ausgeführt ist, um sich gegen den Nocken (23) zu stützen.

8. Einziehsystem einer Ladebordwand (2) nach einem der Ansprüche 3 bis 7, **dadurch gekennzeichnet, dass** ein verstellbarer Anschlag (16) auf dem Sockel (71) des Zylinders (7) befestigt ist, um in der Aufwärtsbewegung der Plattform (3) den Hub der Kurbel (11) zu begrenzen, deren Kopf (13) mit dem besagten Anschlag (16) in Berührung kommt, der voreingestellt ist, damit die Plattform (3) nicht über den Boden (1) hinausragt.

9. Einziehsystem einer Ladebordwand (2) nach einem der vorhergehenden Ansprüche, **dadurch gekennzeichnet, dass** der Körper des Zylinders (7) mit der vertikalen Metallwand des Schlittens (15) durch Verschweißen verbunden ist.

10. Einziehsystem einer Ladebordwand (2) nach einem der vorhergehenden Ansprüche, **dadurch gekennzeichnet, dass** der oder die Zylinder (7), einerseits was den Körper betrifft, aus zwei konzentrischen Zylindern (26, 27), wovon einer (26) eine Stärke aufweist, die das Verschweißen ermöglicht, und innen zumindest zwei kreisrunde, identische Auskehlungen (28, 29) umfasst, um Ringe (30) aus einem Material mit niedrigem Reibungskoeffizienten aufzunehmen, die ausreichend beabstandet sind, um die Führung der Stange (14) zu gewährleisten, und zumindest eine dritte Auskehlung (31), um ein Abdichtungssegment (32) aufzunehmen, und wovon der andere Zylinder (27), der den gleichen Innendurchmesser aufweist und an den ersten (26) in seiner Verlängerung angeschweißt ist, eine geringere Stärke besitzt, die aber ausreichend ist, um die Kammer des Zylinders (7) zu bilden, die an ihrem Ende von einem Metallsockel (71) geschlossen wird, der angeschweißt und imstande ist, den Anschlag (16) aufzunehmen, der in seine Stärke eingeschraubt wird, und andererseits was die Stange (14) betrifft, aus einem einfachen Metallstab bestehen (besteht), der genau in den besagten Ringen (30) gleitet und der an seinem äußeren Ende mit einem Organ (33) für die Verbindung und das eventuelle Zusammenwirken mit dem Fallriegel (21) versehen ist.
